Europäisches Patentamt

European Patent Office

Office européen des brevets

(19)

(11) Veröffentlichungsnummer : **0 314 675 B1**

# (12)  EUROPÄISCHE PATENTSCHRIFT

(45) Veröffentlichungstag der Patentschrift :
22.05.91 Patentblatt 91/21

(51) Int. Cl.⁵ : **B60H 1/00**

(21) Anmeldenummer : 87903266.2

(22) Anmeldetag : 05.06.87

(86) Internationale Anmeldenummer :
PCT/DE87/00257

(87) Internationale Veröffentlichungsnummer :
WO 88/00537 28.01.88 Gazette 88/03

(54) **VERFAHREN ZUM BETREIBEN EINER HEIZ- UND/ODER KLIMAANLAGE FÜR KRAFTFAHRZEUGE.**

(30) Priorität : 17.07.86 DE 3624170

(43) Veröffentlichungstag der Anmeldung :
10.05.89 Patentblatt 89/19

(45) Bekanntmachung des Hinweises auf die
Patenterteilung :
22.05.91 Patentblatt 91/21

(84) Benannte Vertragsstaaten :
DE FR IT

(56) Entgegenhaltungen :
DE-A- 2 952 210
DE-A- 3 223 424
DE-A- 3 526 518
US-A- 4 408 660

(56) Entgegenhaltungen :
Patent Abstracts of Japan, Band 10, Nr 118, (
M-475 ) (2175) 2 Mai 1986 & JP, A, 60248422 (
MATSUSHITA DENKI SANGYO K.K. ) 9 Dezember 1985
Patent Abstracts of Japan, Band 9, Nr 264, (
M-423 ) ( 1987 ) 22 Oktober 1985 & JP, A,
60110518 ( MATSUSHITA DENKI SANGYO K.K.
) 17 Juni 1985
Patent Abstracts of Japan, Band 10, Nr 193 (
M-496 ) (2249) 8 Juli 1986 & JP, A, 6137521 (
SUZUKI MOTOR CO. LTD ) 22 Februar 1986

(73) Patentinhaber : ROBERT BOSCH GMBH
Postfach 50
W-7000 Stuttgart 1 (DE)

(72) Erfinder : FEDTER, Horst
Wiedenbachweg 14
W-7582 Bühlertal (DE)
Erfinder : GRÜNWALD, Werner
Robert-Schumann-Strasse 21
W-7016 Gerlingen (DE)
Erfinder : NOLTING, Peter
Scheffelweg 24
W-7582 Bühlertal (DE)

## Beschreibung

### Stand der Technik

Die Erfindung gebt aus von einem Verfahren zum Betreiben einer Heiz-und/oder Klimaanlage für Kraftfahrzeuge nach der Gattung des Hauptanspruchs (siehe JP-A-59 149 809). Bekannte Anlagen regeln die Innenraumtemperatur des Kraftfahrzeugs auf einem gewünschten oder erforderlichen Wert. Zur Temperaturmessung ist ein im Innenraum angeordneter Fenchte-und Temperatursensor vorgesehen, dessen Ausgangssignal dem Steuergerät der Heiz- und/oder Klimaanlage zugeführt wird. Die Regelung auf eine bestimmte Temperatur ist jedoch nicht gleichbedeutend mit der Bereitstellung eines behaglichen Innenraumklimas, da zur Beurteilung des Klimas außer der Temperatur noch weitere Einflußgrößen maßgebend sind.

### Vorteile der Erfindung

Das erfindungsgemäße Verfabren zum Betreiben der Heiz- und/oder Klimaanlage für Kraftfahrzeuge weist den Vorteil auf, daß außer der Temperatur und der Luftfenchtigkeit im Innenranm auch die relative Luftfeuchtigkeit im Außenbereich berücksichtigt wird.

Durch die in den Unteransprüchen aufgeführten Maßnahmen sind vorteilhafte Weiterbildungen des im Hauptanspruch angegebenen Verfahrens möglich.

Steigt im Innenraum die relative Luftfeuchtigkeit an, so ist es möglich die Temperatur abzusenken, um weiterhin ein behagliches Klima aufrechtzuerhalten. Soll die Temperatur nicht geändert werden, dann wird eine Entfeuchtung der Innenraumluft vorgenommen. Hierzu besonders geeignet ist der Umluftbetrieb, bei dem die Innenraumluft durch einen im Innenraum mündenden Ansaugkanal angesaugt, entfeuchtet und wieder in den Innenraum abgegeben wird.

Besonders vorteilhaft ist es, daß eine Erz bevorstehende, bzw. existierende Beschlagbildung auf den Scheibeninnenseiten erkannt und entsprechende Gegenmaßnahmen eingeleitet werden Können. In Abhängigkeit von den Signalen eines in Scheibennähe angeordneten Temperatursensors und eines Feuchtesensors wird das Klima in Scheibennähe derart beeinflußt, daß eine Kurz bevortehende geschlagbildung verhindert bzw. eine bereits existierende Beschlagbildung beseitigt wird. Dies kann einerseits durch eie Temperaturerhöhung der Luft in Scheibennähe erfolgen, da die Fähigkeit der Luft zur Wasseraufnahme mit zunehmender Temperatur steigt, und andererseits durch Zufuhr von Luft mit geringerer relativer Feuchtigkeit.

Es ist ferner günstig, wenn die Temperatur und relative Feuchtigkeit der durch einen im Freien mündenden Ansaugkanal angesaugten Luft in Abhängigkeit von den Signalen eines im Ansaugkanal angeordneten Temperatursensors und eines Feuchtesensors beeinflußt wird.

Weitere Einzelheiten und vorteilhafte Weiterbildungen des erfindungsgemäßen Verfahrens ergeben sich aus der folgenden Beschreibung.

### Zeichnung

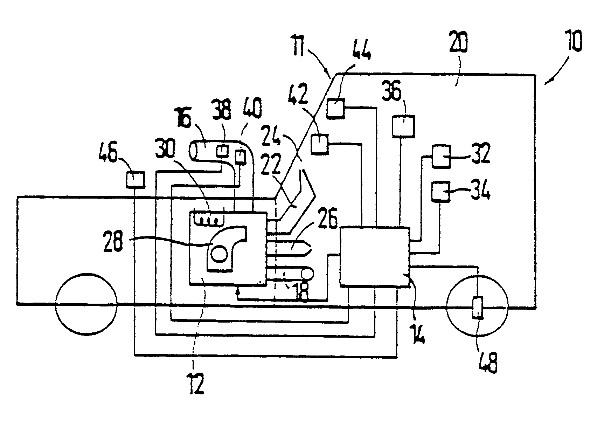

Die Figur zeigt eine in einem Kraftfahrzeug eingebaute Heiz- und/oder Klimaanlage.

### Beschreibung des Ausführungsbeispieles

Die Figur zeigt eine in einem Kraftfahrzeug 10 angeordnete Heiz- und/oder Klimaanlage 12, der ein Regelgerät 14 zugeordnet ist. Die Luftansaugung erfolgt durch einen ersten Ansaugkanal 16, der im Freien mündet, sowie durch einen zweiten Ansaugkanal 18, der im Innenraum 20 des Kraftfahrzeugs 10 mündet. Es sind wenigstens zwei Innenraumbelüftungskanäle vorgesehen, von denen ein erster Belüftungskanal 22 in Scheibennähe 24 einer Scheibe 11, und ein zweiter Belüftungskanal 26 im Innenraum 20 mündet. Eine Luftströmung in den Kanälen 16, 18, 22, 26 entsteht durch Staudruck während der Fahrt oder durch ein Gebläse 28 der Anlage 12. Falls erforderlich, übernimmt eine Heizung oder Kühlung 30 eine Beheizung bzw. Kühlung der in den Innenraum 20 abgegebenen Luft. Die Anlage 12 wird von dem Regelgerät 14 gesteuert bzw. geregelt. Das Regelgerät 14 bestimmt darüber, ob das Gebläse 28 und/oder die Heizung/Kühlung 30 eingeschaltet werden, ob über den ersten Ansaugkanal 16 Außenluft oder über den zweiten Ansaugkanal 18 Innenraumluft angesaugt werden soll und darüber, ob die Belüftung über den ersten Belüftungskanal 22 und/oder den zweiten Belüftungskanal 26 erfolgen soll. Das Regelgerät 14 erhält zur Durchführung der Regelaufgabe das Signal mehrerer Sensoren zugeführt.

Im Innenraum 20 ist ein erster Temperatursensor 32 und ein erster Feuchtesensor 34 angeordnet. Mit diesen beiden Sensoren 32, 34 ist bereits eine Raumklima-Regelung auf einen behaglichen Wert möglich. Zunächst wird über eine Eingabevorrichtung 36 eine Wunschtemperatur eingegeben. Prinzipiell könnte auch die Vorgabe einer gewünschten relativen Luftfeuchtigkeit vorgesehen werden. Ohne genaue Kenntnis des Zusammenhangs zwischen Temperatur und relativer Luftfeuchtigkeit für ein behagliches Klima sind bei dieser Betriebsweise Bedienungsfehler jedoch nicht auszuschließen. Es ist deshalb sweckmäßiger, wenn das Regelgerät 14 einen zulässigen Bereich für die relative Luftfeuchtigkeit als Funktion der eingegebenen Temperatur selbständig festlegen kann. Dieser Zusammenhang kann beispielsweise aus der Fachzeitschrift "Gesundheitsingenieur", Vol. 89, Heft 10, Seite 301-308, 1986 entnommen werden. Die empirisch gefundenen Beziehungen zwischen der Temperatur und der relativen Luftfeuchtigkeit für ein behagliches KLima sind als Tabelle in einer signalverarbeitenden Einheit innerhalb des Regesgerätes 14 abgespeicheret. Da einer bestimmten Temperatur ein Wertebereich der relativen Luftfeuchtigkeit für ein behagliches KLima zugeordnet ist, wird in Abhängigkeit von der gemessenen Luftfeuchtigkeit derjenige Wert der einzuregelnden relativen Luftfeuchtigkeit festgelegt, der mit geringstem Energie-aufwand der Anlage 12 erreicht werden kann.

Eine Möglichkeit zur Regelung bei steigender Luftfeuchtigkeit besteht darin, die Raumtemperatur innerhalb eines Toleranzbandes, das der Bediende noch akzeptiert, abzusenken. Eine zweite Möglichkeit besteht dann darin, daß bei gleichbleibender Temperatur die Luftfeuchtigkeit im Umluftbetrieb gesenkt wird. Dazu saugt die Anlage 12 mit dem im Innenraum 20 müdenden zweiten Ansaugkanal 18 die Innenluft ein, entfeuchtet sie und gibt sie über den ersten Belüftungs-kanal 22 und/oder den zweiten Belüftungskanal 26 wieder in den Innenraum 20 ab. Weterhin ist es möglich, daß die Luftmenge und Luftgeschwindigkeit im Umlufbetrieb in Abhängigkeit von der Feuchte reguliert wird. Ferner besteht die Möglichkeit, daß der Innenluft zusätzliche Außenluft zu gemischt wird. Hierbei ist es zweckmäßig, die Temperatur der Außenluft mit einem zweitenTemperatursensor 38 und die Luftfeuchtigkeit der Außenluft mit einem zweiten Feuchtesensor 40 zu messen sowie erforderlichenfalls eine Heizung 30 bzw. Kühlung und/oder Entfeuchtung der angesaugten Luft in der Anlage 12 vorzunehmen. Besonders günstig ist es, den zweiten Temperatursensor 38 und den zweiten Feuchtesensor 40 im ersten Ansaugkanal 16 anzubringen. Die beiden Sensoren 38, 40 können jedoch auch an anderer, geeigneter Stelle im Außenraum angebracht sein. Im Umluftbetrieb übernimmt das Gebläse 28 die Luftumwälzung. Im Fahrbetrieb kann bereits der Staudruck für die Luftzumischung ausreichend sein.

Neben der Beeinflussung des Innenraumlimas in Abbängigkeit von der Temperatur und der relativen Luftfeuchtigkeit kann die Heiz- und/oder Klimaanlage auch zum Erkennen einer möglichen oder bereits existierenden Beschlagbildung an den Scheibeninnenseiten und Einleiten entsprechender Gegenmaßnahmen herangezogen werden. Zur Durchfübrung dieser Aufgabe sind der erste Belüftungskanal 22, ein dritter Temperatursensor 42, ein dritter Feuchtesensor 44, ein Strahlungssensor 46 und ein Geschwindigkeitssensor 48 vorgesehen.

Die Luft kann Feuchtigkeit als Wasserdampf gelöst bis zu einer Menge aufnehmen, die von der Temperatur abhängt. Je wärmer die Luft ist, desto größer ist die Aufnahmefähigkeit. Kühlt die im Innenraum 20 eingeschlossene Luft ab, kann der Sättigungspunkt, der Taupunkt, unterschritten werden. Auf abgekühlten Oberflächen kondensiert Wasser.

Dieser Effekt macht sich besonders störend auf den Innenflächen der Scheiben 11 bemerkbar.

Der Zusammenhang zwischen relativer Luftfeuchtigkeit, Temperatur und Taupunktunterschreitung ist in einer Tabelle in der signalverarbeitenden Anordnung in dem Regelgerät 14 abgelegt. Bereits mit den beiden Sensoren 42, 44, die in Scheibennähe 24 angeordnet sind, ist eine bevorstehende oder bereits eingetretene Taupunktunterschreitung erkennbar.

Eine Taupunktunterschreitung kann durch Gegenmaßnahmen verhindert werden. Als erste Maßnahme wird das Gebläse 28 eingeschaltet, das über den ersten Belüftungskanal 22, der in Scheibennähe 24 mündet, einen Luftstrom an den Scheiben 11 vorbeibläst. Wird die Scheibenbelüftung im Umluftbetrieb vorgenommen, so wird eine Heizung 30 der umgewälzten Luft und/oder eine Entfeuchtung erforderlich sein. Nur die erwarmte Luft vermag eine höhere Wasserdampfmenge aufzunehmen. Auf die Heizung 30 kann verzichtet werden, wenn über den ersten Ansaugkanal 16 Außenluft angesaugt wird und über den ersten Belüftungskanal 22 in den Innenraum eingeblasen wird. Auch dann, wenn die Außenluft eine relative Luftfeuchtigkeit von nahezu 100% aufweist, ergibt sich eine Antibeschlagwirkung, wenn die Innenraumtemperatur nur um wenige Grad höher liegt als die Außentemperatur. Gegebenenfalls ist mit Hilfe des zweiten Temperatursensor 38 und des zweiten Feuchtesensors 40, die im ersten Ansaugkanal 16 angeordnet sind, eine Vorbehandlung der angesaugten Luft in der Anlage 12 möglich.

Der dritte Temperaturfühler 42 in Scheibennähe 24 kann entfallen bei Ermittlung der Scheibentemperatur aus einer Korrelation zwischen Außen- und Innenraumtemperatur. In diesem Falle ist der zweite Temperatursensor 38 erforderlich. Dieser Sensor ist, wie bereits beschrieben, im ersten Ansaugkanal 16 oder an einer anderen, geeigneten Stelle im Außenraum angeordnet. Der Rükschlußauf die Scheibentemperatur aus der Messung von Außen- und Innenraumtemperatur wird verbessert, wenn die eingestrahlte Wärme Berücksichtigung findet. Die Strahlung erfaßt der Strahlungssensor 46, der an einer nach oben freien Fläche des Kraftfahrzeugs 10 montiert sein muß. Eine zusätzliche Verbesserung der Scheibentemperatur-Schätzung ist durch die Erfassung der Fahrgeschwindigkeit mit dem Geswindigkeitssensor 48 möglich. Dieser Sensor ist zumeist ohnehin vorhanden. Eine zunehmende Fahrgeschwindigkeit erhöht den Luftaustausch auf der äußeren Oberfläche der Scheiben 11 und führt damit zu einer Angleichung der äußeren Oberflächentemperatur der Scheiben 11 an die Außentemperatur. Ist beispielsweise die Außentemperatur geringer als die Innenraumtemperatur, dann sinkt mit zunehmender Fahrgeschwindigkeit die Scheibentemperatur ab und die Gefahr einer Taupunktunterschreitung erhöht sich in gleichem Maße. Die erforderlichen Gegenmaßnahmen zur Vermeidung einer Taupunktunterschreitung auf den Scheiben 11 können somit rechtzeitig eingeleitet werden.

**Ansprüche**

1. Verfahren zum Betreiben einer Heiz- und/oder Klimaanlage für Kraftfahrzeuge, die in Abhängigkeit von Signalen wenigstens eines im Fahrzeuginnenraum angeordneten Temperatur- und Feuchtesensors sowie in Abhängigkeit von den Signalen wenigstens eines im Außenbereich des Kraftfahrzeugs angeordneten Temperatursensor die Lufttemperatur und die Luftfeuchtigkeit im Innenraum beeinflußt, wobei die Heiz- und/oder Klimaanlage wenigstens einen im Außenbereich mündenden Ansaugkanal und wenigstens einen im Innenraum sowie in Scheibennähe mündenden Belüftungskanal aufweist, dadurch gekennzeichnet. daß das Innenraumklima in Abhängigkeit von dem Signal wenigstens eines im Außenbereich des Kraftfahrzeugs (10) angeordneten zweiten Feuchtesensors (40) zur Erfassung der relativen Luftfeuchtigkeit im Außenbereich beeinflußt wird.

2. Verfahren nach Anspruch 1, dadurch gekennzeichet, daß bei steigender relativer Luftfeuchtigkeit die Temperatur abgesenkt wird.

3. Verfahren nach Anspruch 1 oder 2, dadurch gekennzeichnet, daß bei steigender relativer Luftfeuchtigkeit eine Luftentfeuchtung im Umluftbetrieb vorgenommen wird, wobei die Innenraumluft von der Heiz- und/oder Klimaanlage (12) durch einen im Innenraum (20) mündenden Ansaugkanal (18) angesaugt wird.

4. Verfahren nach Anspruch 3, dadurch gekennzeichnet, daß die umgewälzte Luftmenge in Abhängigkeit von der relativen Luftfeuchtigkeit reguliert wird.

5. Verfahren nach Anspruch 3 oder 4, dadurch gekennzeichnet, daß die Luftgeschwindigkeit der umgewälzten Luft in Abhänigkeit von der relativen Luftfeuchtigkeit reguliert wird.

6. Verfahren nach Anspruch 1, dadurch gekennzeichnet, daß das Klima in Scheibennähe (24) in Abhängigkeit von den Signalen des ersten Temperatursensor (32) und des ersten Feuchtesensors (34) sowie wenigstens eines zweiten im Außenbereich des Kraftfahrzeugs (10) angeordneten Temperatursensors (38) derart beeinflußt wird, daß einer Taupunktunterschreitung auf den Innenseiten der Scheiben (11) entgegengewirkt wird.

7. Verfahren nach Anspruch 6, dadurch gekennzeichnet, daß das Klima in Scheibennähe (24) in Abhängigkeit von der Globalstrahlung beeinflußt wird, die mit einem Strahlungssensor (46) gemessen wird.

8. Verfahren nach einem der Ansprüche 6 oder 7, dadurch gekennzeichnet, daß das Klima in Scheibennähe (24) in Abhängigkeit von der Fahrgeschwindigkeit beeinflußt wird, die mit einem Geschwindigkeitssensor (48) erfaßt wird.

9. Verfahren nach einem der Ansprüche 1 oder 6 bis 8, dadurch gekennzeichnet, daß das Klima in Scheibennähe (24) in Abhängigkeit von Signalen von wenigstens einem in Scheibennähe (24) angeordneten, dritten Temperatursensor (42) und einem dritten Feuchtesensor (44) derart beeinflußt wird, daß einer Taupunktunterschreitung auf der Innenseite der Scheiben (11) entgegengewirkt wird.

10. Verfahren nach einem der Ansprüche 6 bis 9, dadurch gekennzeichnet, daß bei einer bevorstehenden oder bereits existierenden Taupunktunterscheidung eine Temperaturerhöhung der durch den in Scheibennähe (24) mündenden Belüftungskanal (22) eingeblasenen Luft vorgenommen wird.

11. Verfahren nach einem der Ansprüche 6 bis 10, dadurch gekennzeichnet, daß die durch den in Scheibennähe (24) mundenden Belüftungskanal (22) eingeblasene Luft eine geringere relative Feuchtigkeit aufweist als die in Scheibennähe (24) befindliche Luft.

12. Verfahren nach einem der Ansprüche 1 bis 11, dadurch gekennzeichnet, daß die Temperatur und die relative Feuchtigkeit der durch den im Außenbereich mündenden Ansaugkanal (16) angesaugten Luft in Abhängigkeit von Signalen von wenigstens dem einen im Außenbereich des Kraftfahrzeugs (10), vorzugsweise im Ansaugkanal (16) angeordneten, zweiten Temperatursensor (38) und wenigstens einem im Außenbereich des Kraftfahrzeugs (10), vorzugsweise im Ansaugkanal (16) angeordneten, zweiten Feuchtesensor (40) beeinflußt wird.

**Claims**

1. Process for controlling a heating and/or airconditioning installation in motor vehicles which conditions the air temperature and air humidity in the passenger compartment depending on signals of at least one temperature and humidity sensor arranged in the passenger compartment of the vehicle as well as depending on the signals of at least one temperature sensor arranged on the outside of the motor vehicle, the heating and/or airconditioning installation having at least one intake channel leading to the outside and at least one ventilation channel leading into the passenger compartment as well as near the window panes, characterised in that the climate of the passenger compartment is conditioned depending on the signal of at least one second humidity sensor (40) arranged on the outside of the motor vehicle (10) for the purpose of detecting the relative humidity outside.

2. Process according to Claim 1, characterised in that when there is a rise in relative humidity, the temperature is lowered.

3. Process according to Claim 1 or 2, characterised in that when there is a rise in relative humidity, dehumidification of the air takes place in the ventilation operation, the passenger compartment air being sucked in by the heating and/or air-conditioning installation (12) through an intake channel (18) leading into the passenger compartment (20).

4. Process according to Claim 3, characterised in that the circulated quantity of air is regulated depending on the relative humidity.

5. Process according to Claim 3 or 4, characterised in that the velocity of the circulated air is regulated depending on the relative humidity.

6. Process according to Claim 1, characterised in that the climate near to the window panes (24) is conditioned depending on the signals of the first temperature sensor (32) and of the first humidity sensor (34) as well as of at least a second temperature sensor (38) arranged on the outside of the motor vehicle (10) in such a way that action is taken against a temperature drop below the dew point on the insides of the window panes (11).

7. Process according to Claim 6, characterised in that the climate near the window panes (24) is conditioned depending on the global solar radiation which is measured with a radiation sensor (46).

8. Process according to one of Claims 6 or 7, characterised in that the climate near the window panes (24) is conditioned depending on the travelling speed which is detected using a speed sensor (48).

9. Process according to one of Claims 1 or 6 to 8, characterised in that the climate near the window panes (24) is conditioned depending on signals from at least a third temperature sensor (42) arranged near the window panes (24) and a third humidity sensor (44) in such a way that action is taken against a temperature drop below the dew point on the inside of the window panes (11).

10. Process according to one of Claims 6 to 9, characterised in that in the event of an impending or already existing temperature drop below the dew point, a temperature increase of the air blown in through the ventilation channel (22) leading in near the window panes (24) is brought about.

11. Process according to one of Claims 6 to 10, characterised in that the air blown in through the ventilation channel (22) leading in near the window panes (24) has a lower relative humidity than the air located near the window panes (24).

12. Process according to one of Claims 1 to 11, characterised in that the temperature and the relative humidity of the air sucked in through the intake channel (16) leading to the outside is conditioned depending on signals of at least a second temperature sensor (38) arranged on the outside of the motor vehicle (10), preferably in the intake channel (16) and at least a second humidity sensor (40) arranged on the outside of the motor vehicle (10), preferably in the intake channel (16).

## Revendications

1. Procédé de commande d'une installation de chauffage et/ou de conditionnement d'air pour véhicules à moteur qui modifie la température de l'air et l'humidité de l'air dans l'habitacle en fonction des signaux d'au moins un capteur de température et d'humidité placé dans l'habitacle ainsi qu'en fonction de signaux d'au moins un capteur de température placé à l'extérieur du véhicule à moteur, l'installation de chauffage et/ou de conditionnement d'air présentant au moins un canal d'aspiration débouchant à l'extérieur et au moins un canal de ventilation débouchant à proximité des glaces dans l'habitacle, caractérisé en ce qu'on modifie l'ambiance interne en fonction du signal d'au moins un deuxième capteur d'humidité (40) placé à l'extérieur du véhicule à moteur (10) pour mesurer l'humidité relative à l'extérieur.

2. Procédé selon la revendication 1, caractérisé en ce que lorsque l'humidité relative de l'air augmente on diminue la température.

3. Procédé selon la revendication 1 ou 2, caractérisé en ce que lorsque l'humidité relative de l'air augmente, on réalise un séchage de l'air dans le recyclage de l'air, en aspirant l'air de l'habitacle par l'installation de chauffage et/ou de conditionnement d'air (12) grâce à un canal d'aspiration (18) débouchant dans l'habitacle (20).

4. Procédé selon la revendication 3, caractérisé en ce qu'on régule la quantité d'air recyclée en fonction de l'humidité relative de l'air.

5. Procédé selon la revendication 3 ou 4, caractérisé en ce qu'on régule la vitesse de l'air recyclé en fonction de l'humidité relative de l'air.

6. Procédé selon la revendication 1, caractérisé en ce qu'on modifie l'ambiance à proximité des glaces (24) en fonction des signaux du premier capteur de température (32) et du premier capteur d'humidité (34) ainsi que d'au moins un deuxième capteur de température (38) placé à l'extérieur du véhicule à moteur (10) de façon à s'opposer au franchissement d'un point de rosée sur les faces internes des glaces (11).

7. Procédé selon la revendication 6, caractérisé en ce qu'on modifie l'ambiance à proximité des glaces (24) en fonction du rayonnement global, qu'on mesure avec un capteur de rayonnement (46).

8. Procédé selon l'une des revendications 6 ou 7, caractérisé en ce qu'on modifie l'ambiance à proximité des glaces (24) en fonction de la vitesse du véhicule, qu'on mesure avec un capteur de vitesse (48).

9. Procédé selon l'une des revendications 6 à 8, caractérisé en ce qu'on modifie l'ambiance à proximité des glaces (24) en fonction de signaux provenant d'au moins un troisième capteur d'humidité (44) et d'un troisième capteur de température (42) placé à proximité d'une glace, de sorte qu'on puisse s'opposer à un franchissement en-dessous du point de rosée sur la face intérieure des glaces (11).

10. Procédé selon l'une des revendications 6 à 9, caractérisé en ce que lorsque le franchissement en-dessous du point de rosée est imminent ou existe déjà, on insuffle de l'air par le canal de ventilation (22) débouchant à proximité de la glace (24) pour augmenter la température.

11. Procédé selon l'une des revendications 6 à 10, caractérisé en ce que l'air insufflé par le canal de ventilation (22) débouchant à proximité de la glace (24) comporte une humidité relative plus faible que l'air se trouvant à proximité de la glace (24).

12. Procédé selon l'une des revendications 1 à 11, caractérisé en ce que la température et l'humidité relative de l'air aspiré par le canal d'aspiration (16) débouchant à l'extérieur est modifiée en fonction de signaux au moins d'un deuxième capteur de température (38) placé à l'extérieur du véhicule (10), de préférence dans le canal d'aspiration (16) et au moins d'un deuxième capteur d'humidité (40) placé à l'extérieur du véhicule (10), de préférence dans le canal d'aspiration (16).